# EUROPÄISCHE PATENTANMELDUNG

(11) **EP 2 169 588 A1**
(43) Veröffentlichungstag der Anmeldung: **31.03.2010**
(21) Anmeldenummer: 08016732.3
(22) Anmeldetag: 24.09.2008
(51) Int. Cl.: G06F 21/24

(54) **Verfahren zur Gewährleistung von Sicherheit**

(71) Anmelder: EADS Deutschland GmbH, 85521 Ottobrunn (DE)
(72) Erfinder: Hoche, Michael, Dr., 88090 Immenstaad a. B. (DE); Kortwinkel, Martin, 88682 Salem (DE)
(74) Vertreter: Meel, Thomas

(57) **Zusammenfassung**

Die Erfindung betrifft ein Verfahren zur Gewährleistung von Sicherheit, bei dem Subjekten Rechte an Objekten eingeräumt werden, wobei der Zugriff durch ein Subjekt auf ein Objekt nur dann möglich ist, wenn dem Subjekt ausreichende Rechte eingeräumt sind. Gemäß der Erfindung sind die Rechte geordnet und das Verfahren umfasst die folgenden Schritte:
- Zuordnen eines oder mehrerer notwendigen Rechte an ein Objekt durch eine erste Funktion von den Objekten in die Rechte,
- Zuordnen eines oder mehrerer eingeräumten Rechte an ein Subjekt durch eine zweite Funktion von den Subjekten in die Rechte und
- Prüfen, ob ein Subjekt Rechte an einem Objekt hat, indem das Ergebnis der ersten Funktion mit dem Ergebnis der zweiten Funktion bezüglich der Ordnung verglichen wird.

## Beschreibung

Die Erfindung betrifft ein Verfahren und Softwaresysteme zur Gewährleistung von Sicherheit.

Im Gebiet der technischen Zugriffskontrolle, auch logische Zugriffkontrolle genannt, handelt es sich um die Restriktion des Zugriffes durch Komponenten von Betriebssystemen, Software Applikationen, Netzwerkgeräte oder Protokolle etc. Es existieren im Wesentlichen zwei Grundmodelle: Discretionary Access Control und Mandatory Access Control.

In http://de.wikipedia.org/wiki/Discretionary Access Control ist Discretionary Access Control (DAC) als benutzerbestimmbare Zugriffskontrolle definiert. Hierbei wird die Entscheidung, ob auf eine Ressource zugegriffen werden darf, allein auf der Basis der Identität eines Users getroffen. Das heißt, die Zugriffsrechte für (Daten-)Objekte werden pro Benutzer festgelegt. Eine Aggregation dieses Konzeptes stellt die Verwendung von Benutzerrollen bzw. -Gruppen dar.

Die Discretionary Access Control bildet das Gegenteil der Mandatory Access Control, die den Zugriff aufgrund von allgemeinen Regeln und zusätzlicher Informationen über den Users treffen.

Zugriffsrechte können als eine Relation von Subjekt, Objekt und Recht beschrieben werden. Subjekte sind in diesem Zusammenhang Akteure, also zum Beispiel Benutzer, Prozesse oder Programme. Objekte sind Daten oder Ressourcen (wie Dateien, Drucker, etc), auf denen ein Subjekt Operationen ausführen kann. Subjekte können gleichzeitig auch Objekte sein.

Eine Möglichkeit zur Darstellung der Zugriffsrechte, die diesem Faktor Rechnung trägt, ist ein Graph mit gerichteten, beschrifteten Kanten: Jeder Knoten im Graph entspricht einem Subjekt oder Objekt, jede Kante einer "hat-Recht-x"-Beziehung.

Unter Umständen ist es notwendig, für bestimmte eingeschränkte Operationen dem Benutzer erweiterte Zugriffsrechte zu gewähren.

Unter http://de.wikipedia.org/wiki/Mandatory Access Control ist Mandatory Access Control (MAC) als eine zwingend erforderliche Zugangskontrolle definiert. Die Entscheidungen über Zugriffsberechtigungen werden nicht nur auf der Basis der Identität des Akteurs (Benutzers, Prozesses) und des Objekts (Ressource) gefällt, sondern aufgrund zusätzlicher Regeln und Eigenschaften (wie Kategorisierungen, Labels und Code-Wörtern). Im Unterschied zu anderen Zugriffsmodellen wie DAC oder Role Based Access Control (RBAC) werden spezielle Funktionen in eine Software oder die Anwendungsprogramme integriert, welche den Zugriff, die Benutzung und Konvertierung von Informationen nur unter den im jeweiligen Konzept geltenden Voraussetzungen erlauben.

Modelle der Mandatory Access Control dienen dazu, die Sicherheit von Informationen vor unautorisiertem Zugriff sicherzustellen und auch systemtechnisch zu erzwingen. Der Schutz der Informationen bezieht sich auf Vertraulichkeit und Integrität.

Vertraulichkeit ist das Verhindern des Zugriffs von nicht autorisierten Personen auf geschützte Informationen. Als Beispiel können hier Informationen aufgeführt werden, welche der Geheimhaltung unterstehen.

Integrität ist das Verhindern der Manipulation von Informationen durch unautorisierte Personen. Als Beispiel kann hier die Befehlskette eines militärischen Einsatzsystems wie den Command and Control Systemen angeführt werden.

Vor allem im Bereich des Militärs werden solche Zugriffssysteme benötigt, wobei es sich um sensible Informationen bezüglich der Führung oder Aufklärung handelt, aber auch im Bereich der Behörden, wobei es sich hier um Informationen bezüglich Technik, Politik, Außenhandel sowie der Nachrichtentechnik handelt. Ein weiterer Anwendungsbereich sind Patientendaten in der Gesundheitsbranche, zum Beispiel bei einer Patientenkarte, oder Vertragsdaten bei Geschäftstransaktionen.

Im einfachsten Fall, den Multi-Level-Sicherheitssystemen (MLS), bilden solche Systeme das Modell der Schutzstufen ab. Dabei wird jedes Objekt (Ressource) einer Schutzstufe zugeordnet. Die einzelnen Schutzklassen unterteilen die Objekte in "Schichten" (vertikale Gliederung). Der Ausdruck "vertikal" bezieht sich auf den Informationsfluss und bedeutet, dass Informationen ohne Weiteres nur innerhalb Schichten fließen dürfen. Eine geheime Information darf nicht außerhalb des zugelassenen Nutzerkreises öffentlich werden. Jedem Subjekt (Akteur, Benutzer) wird nun ebenfalls eine Schutzstufe zugewiesen (Vertrauen). Ein Subjekt darf nur dann auf ein Objekt einer anderen Schicht zugreifen, wenn die Schutzstufe des Subjekts mindestens so hoch ist wie die Schutzstufe des Objekts.

Im komplexeren Fall, den Multilateralen Sicherheitsmodellen, bilden solche Systeme nicht nur eine vertikale Gliederung in Schutzstufen ab, sondern einen Verband, bestehend aus mehreren Schutzstufen und Codewörtern. Technisch sind sowohl Schutzstufen als auch Codewörter oft als Labels abgebildet. Somit ergibt sich ein horizontales Zugriffssystem (die Codewörter), welches zusätzliche vertikale Eigenschaften (die Schutzstufen) aufweist.

Die Multi-Level-Sicherheitssysteme (MLS), siehe http://en.wikipedia.org/wiki/Multi-level secure, entsprechen der ursprünglichen Form der Mandatory Access Control. MLS und finden Anwendung in Enterpriseapplikation im militärischen oder sicherheitstechnischen Bereich. Bis heute ist diese Art der Mandatory Access Control am weitesten verbreitet. Bei den MLS-Systemen wird der Zugriff immer anhand der Schutzstufen abgebildet. Die Zugriffssicherheit bezieht sich auf den Top-Down- und Bottom-Up-Informationsfluss. In diesem Kontext werden verschieden Sicherheitsmodelle verfolgt:
Das Bell-LaPadula-Modell adressiert die Vertraulichkeit der Daten. Es soll nicht möglich sein, Informationen einer höheren Schutzstufung zu lesen oder Informationen einer höheren Schutzstufung in eine tiefere Schutzstufung zu überführen.
Beim Biba-Modell werden Informationen nicht vor dem Lesen, sondern vor Manipulation durch Unbefugte geschützt. Das Biba-Modell adressiert die Integrität der Daten.
Low-Watermark Mandatory Access Control ist eine Variation des Biba-Modells, welches erlaubt, dass Subjekte hoher Integrität lesend auf Objekte niedrigerer Integrität zugreifen. Es wird die Integrität des lesenden Subjekts heruntergesetzt, damit dieses nicht mehr schreibend auf Objekte mit hoher Integrität zugreifen kann.

Der Begriff "Multilaterale Sicherheitsmodelle" wird für Sicherheitssysteme verwendet, die nicht nur Top-down- oder Bottom-up-Betrachtungen anstellen, wie das Bell-LaPadula oder Biba-Modell, sondern die Zugriffsrechte auf Basis von Segmenten vergeben. Die Multilateralen Sicherheitsmodelle werden auch als Policybasierende Sicherheitsmodelle oder Regelbasierte Sicherheitssysteme bezeichnet. Prominentester Vertreter ist das Compartment-Modell, welches das Bell-LaPadula Modell erweitert. Dieses Modell ist eine Kombination von Schutzstufen mit dem Prinzip des notwendigen Wissens (Need to know). Objekte werden sowohl vertikal (nach Schutzstufe) als auch horizontal (nach Sachgebiet) unterteilt, Subjekte werden pro Sachbereich einer Schutzstufe zugeordnet. Ein Zugriff kann nur erfolgen, wenn die Voraussetzung beider Regelsysteme erfüllt ist. Hauptaugenmerk wird auf eine Kontrolle des Informationsflusses gelegt. Es soll nicht möglich sein, dass vertrauliche Informationen an nicht vertrauenswürdige Personen weitergegeben werden. In dem Chinese Wall - Brewer-Nash werden Regeln definiert, die verhindern sollen, dass ein Interessenkonflikt herbeigeführt wird. Dieses Modell, eine Variation des Lattice-Modells, bildet Separation of Duty innerhalb der Zugriffskontrolle ab.

Im Gegensatz zu den aus dem militärischen Bereich stammenden Modellen, wie Bell-LaPadula und Biba-Modell, welche die Anforderungen an Trusted Computer System Evaluation Criteria erfüllen, versucht das Clark-Wilson-Modell, Integrität für Sicherheitssysteme zu spezifizieren. Es lässt sich auf Geschäftsprozesse und sonstige Anwendungssoftware anwenden. Das Clark-Wilson-Modell beschreibt die Integrität. Das Modell beschreibt mittels Einhaltungs- (enforcement) und Zertifizierungsregeln (certification) Daten und Prozesse. Diese Regeln bilden die Basis zur Sicherstellung der Integrität eines Systems. Das Modell basiert auf geschlossenen Transaktionen. Initial befindet sich das System in einem gültigen (konsistenten) Anfangszustand. Zugriff auf das System erfolgt nur mittels explizit erlaubter Transaktionen. Nur solche Transaktionen sind erlaubt, die das System unter allen Umständen in einen (neuen) gültigen Zustand bringen.

Diametral dazu ist das Prinzip des notwendigen Wissens eine Alternative zum Schutzklassenmodell. Hier werden die Objekte "horizontal" in Sachbereiche gegliedert; jedem Subjekt werden die Sachbereiche zugewiesen, für die er oder sie zuständig sein soll. Je nach Ausprägung muss nun ein Subjekt, das auf ein Objekt zugreifen will, entweder allen oder zumindest einem Sachgebiet angehören, das dem Objekt zugeordnet ist. So wird der Verbreitungsbereich von Informationen wesentlich eingeschränkt, eine Kontrolle der Informationsflüsse wird erleichtert.

Der Vorteil dieses Sicherheitskonzeptes besteht darin, dass den einzelnen Akteuren nur die Rechte eingeräumt werden, die sie für ihr Aufgabengebiet benötigen. Hierdurch wird das Risiko eines Missbrauchs von Anwendungen durch Ausnutzung von Sicherheitslücken minimiert.

Der Nachteil dieses Konzeptes besteht in der Komplexität der Konfiguration, da für jede Anwendung ermittelt werden muss, welche Zugriffsberechtigungen benötigt werden und für die Erstellung von Anwendungen müssen spezielle Funktionen in das IT-System und die Anwendungsprogramme integriert werden. Weiterhin sind Aufgaben in agilen Abläufen oft nicht vorhersehbar, was die Rechtvergabe a priori unmöglich macht.

Diese Probleme und Nachteile werden durch ein Verfahren zur Gewährleistung von Sicherheit, bei dem durch Subjekte Operationen auf Objekten ausgeführt werden können, wobei einem Subjekt ausreichende Rechte eingeräumt sein müssen, um eine Operation auf einem Objekt auszuführen, durch die folgenden Maßnahmen überwunden:
- Ordnen der Menge der Rechte,
- Zuordnen des Rechts an einem Objekt, eine Operation auszuführen, durch eine erste Funktion von den Objekten in eine Präsentation der Menge der Rechte erfolgt,
- Zuordnen des Rechts eines Subjekts, eine Operation auszuführen, durch eine zweite Funktion von den Objekten in die Präsentation der Menge der Rechte erfolgt und
- Überprüfen, ob das Recht des Subjekts ausreichend ist, um die Operation auf dem Objekt auszuführen, durch Vergleichen bezüglich der Ordnung der Resultate der ersten Funktion und der zweiten Funktion.

Entsprechend werden diese Probleme und Nachteile durch ein Softwaresystem zur Gewährleistung von Sicherheit durch das Einräumen von Rechten überwunden, indem Subjekte Operationen auf Objekten ausführen können, wenn einem Subjekt ausreichende Rechte eingeräumt sind, um eine Operation auf einem Objekt auszuführen, wenn das Softwaresystem Mittel umfasst, die das Verfahren realisieren.

Genauso können mehrere Komponenten mit eigenem jeweiligem Sicherheitssystem zu einem Sicherheitssystem integriert werden, wenn diesem Gesamtsoftwaresystem die Gewährleistung der Sicherheit obliegt.

Etwaige bevorzugte Ausführungsformen sind den jeweiligen Unteransprüchen zu entnehmen.

Abstrahiert, realisiert oder simuliert man bestehende Rechtesysteme durch den beanspruchten Mechanismus, beispielsweise durch die Zuordnung an Subjekte vergebenen Rechten und von Objekten benötigten Rechten aus einer geordneten Menge an Rechten, lässt sich dynamisch zur Ausführungszeit ermitteln, ob ein spezielles Subjekt oder eine Menge von Subjekten auf einer Aggregation von Objekten operieren darf. Das hat insbesondere den Vorteil, dass mehrere Rechtesysteme formal und widerspruchsfrei sogar zur Laufzeit durch einen einzigen Mechanismus integriert werden können.

Die Formalisierung ist eine wichtige Voraussetzung für die Verifizierung zur Gewährleistung der Sicherheit. Diese kann modular auf Objekten, Subjekten und Kontexten erfolgen. Durch die freie (universelle) Konstruktion auf Basis von Homomorphismen ist das gesamte Rechtesystem verifiziert, wenn das Rechtesystem auf den Objekten und Subjekten verifiziert ist.

Durch das beanspruchte Verfahren lassen sich erst mehrere Komponentenkontexte in einen einheitlichen unifizierenden Kontext integrieren. Dies ist die Basis für eine Integration von Komponenten mit eigenem Rechtesystem (Kontext). Diese Eigenschaft ermöglicht beispielsweise die Integration eines Lightweight Directory Access Protocol (LDAP) basieren Accountings eines Portals mit dem Accounting eines Betriebssystems oder mehrerer integrierter Servicekomponenten zu realisieren.

Das Verfahren kann generisch realisiert werden und erfordert keinen Eingriff in beteiligte Komponenten wie die üblichen Techniken.

Die Erfindung wird im Folgenden durch Ausführungsbeispiele und Darstellung des Standes der Technik unter Verwendung der folgenden Abbildungen beschrieben:
- Abb. 1: und 2 zeigen eine Analyse des Standes der Technik und verdeutlichen die oben beschriebenen Rechtesysteme;
- Abb. 3: zeigt wie die Komplexität der Rechtesysteme aus dem Stand der Technik beherrscht wird;
- Abb. 4: zeigt eine Formalisierung der notwendigen Rechte nach dem beanspruchten Verfahren;
- Abb. 5: zeigt eine Definition der eingeräumten Rechte nach dem beanspruchten Verfahren;
- Abb. 6: zeigt eine Definition der notwendigen Rechte nach dem beanspruchten Verfahren;
- Abb. 7: illustriert eine Einbettung der Objekte und der Subjekte in die Rechte nach dem beanspruchten Verfahren:
- Abb. 8: illustriert die universelle Konstruktion für die Aggregation von Objekten nach dem beanspruchten Verfahren;
- Abb. 9: illustriert die universelle Konstruktion für die Aggregation von Subjekten nach dem beanspruchten Verfahren;
- Abb. 10: zeigt ein kommutatives Diagram für das beanspruchte Verfahren;
- Abb. 11: illustriert eine Vergabe von Rechten an atomare Objekte / Subjekte nach dem beanspruchten Verfahren;
- Abb. 12: illustriert eine Vergabe von Rechten an aggregierte Objekte / Subjekte nach dem beanspruchten Verfahren;
- Abb. 13: illustriert zwei unabhängige Rechtekontexte;
- Abb. 14: illustriert das direkte Produkt der Rechtekontexte aus Abb. 13;
- Abb. 15: zeigt die universell Konstruktion für ein gemeinsames Rechtesystem nach dem beanspruchten Verfahren.

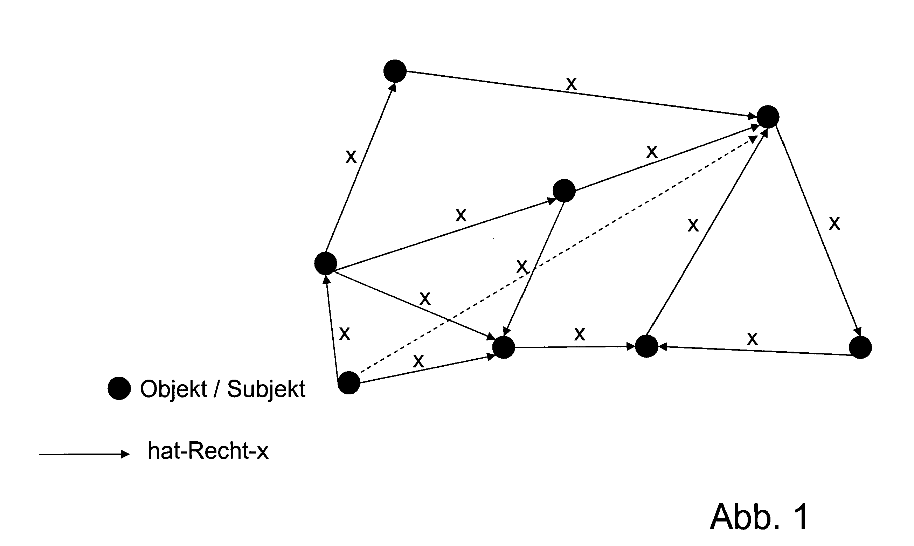

Abb. 1 zeigt ein Rechtesystem aus dem Stand der Technik wie oben beschrieben. Objekte und Subjekte sind durch Kreise dargestellt. Hat ein Subjekt ein Recht X an einem Objekt, so ist das Subjekt mit dem Objekt durch einen mit x beschrifteten Pfeil verbunden.

Das Rechtesystem illustriert, dass Objekte durchaus auch Subjekte sein können. Die Abbildung zeigt auch, dass die Rechte nicht transitiv sein müssen, was in der Regel zu Anomalien führt.

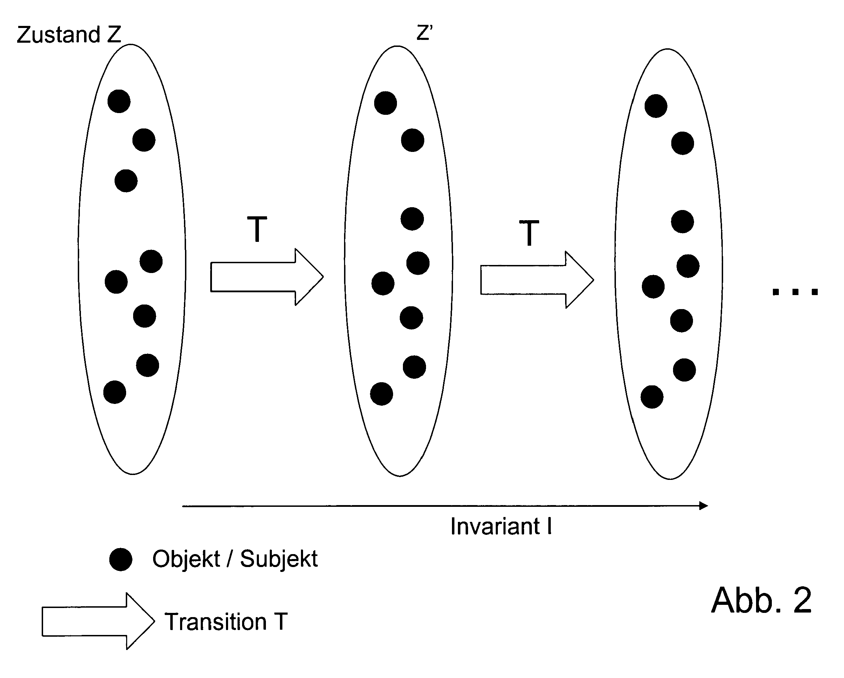

Abb. 2 zeigt ein alternatives Rechtesystem aus dem Stand der Technik. Das Rechtesystem besteht aus Zuständen Z und erlaubte Transaktionen T, die einen sicheren Zustand Z in einen sicheren Folgezustand Z' überführen, so dass als Invariante I die Systemsicherheit eingehalten wird. Die Objekte sind wieder durch Kreise dargestellt. Die Transaktionen T sind durch große Pfeile dargestellt. Die Systemzustände sind durch Venn-Diagramme von Objekten dargestellt, die durch eine Transaktion T modifiziert werden.

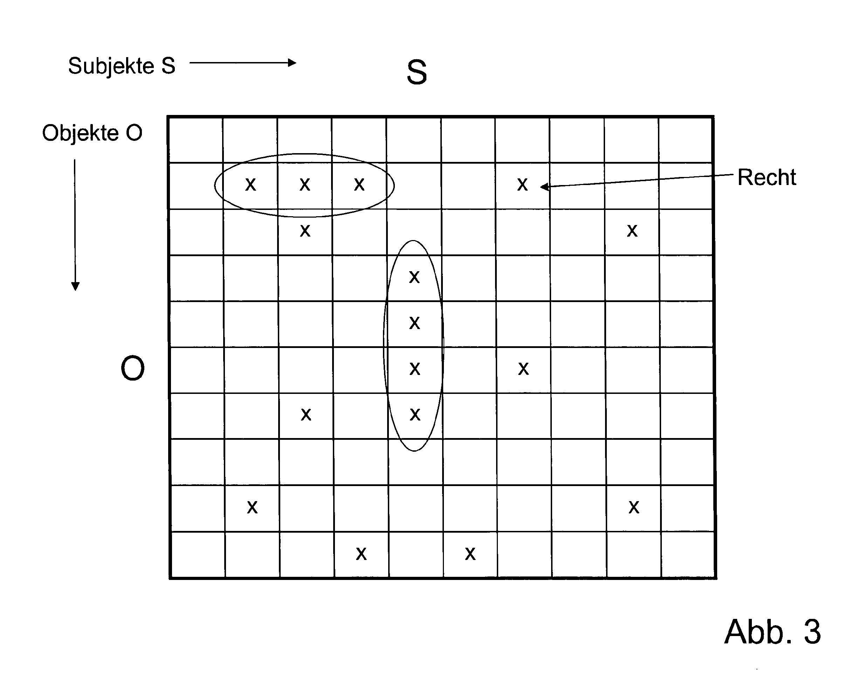

Abb. 3 zeigt wie die Komplexität der Rechtesysteme aus dem Stand der Technik. Die Rechte x werden in dieser Darstellung in einer Matrix von Subjekten S und Objekten O definiert. Existiert ein Eintrag x, so hat Subjekt x das Recht auf Objekt O.

Anderenfalls, bei keinem Eintrag ist kein Recht von Subjekt S auf Objekt O definiert.

Es existieren 2^{*ln***m*} Rechtesysteme für n Objekte, m Subjekte und I Rechtearten. Durch die immense Anzahl der möglichen Schemas ist dieser Ansatz nicht handhabbar. Deswegen werden in technischen Realisierungen Vereinfachungen vorgenommen, bei denen Rechtedefinitionen zusammengefasst sind. Das ist in Abb. 3 durch die Ellipsen dargestellt.

Die Zusammenfassung von Subjekten wird üblicherweise als Gruppe bezeichnet und oft mit einer Rolle identifiziert. Aggregationen von Objekten geschehen üblicherweise durch hierarchische Dekomposition.

Zum Beispiel bietet das Betriebssystem UNIX den Mechanismus für User, die Subjekte, Gruppen zu definieren. Damit können Schreib-, und Lese- und Ausführungsrechte für Dateien, den Objekten, eingeräumt werden - und das rekursiv entlang einer Verzeichnishierarchie, was einer Aggregation von Objekten entspricht.

Dieses Verfahren ist bei disjunkten Rechtesystemen einfach und überschaubar. Es wird jedoch beispielsweise bei der Kollaboration zweier User in verschiedenen Gruppen notwendig ein gemeinsames Recht auf einer Datei zu definieren. Dadurch wird das so erweiterte Rechtesystem kompliziert und fehleranfällig. Es gehen auch die ursprünglichen Semantiken der Gruppendefinitionen verloren und das Rechtesystem gleicht in seiner Komplexität der Komplexität der Kollaborationsstruktur. Ändert sich die Kollaborationsstruktur, wird das Rechtesystem obsolet und die Pflege eines aus dynamischen Szenarien resultieren konsistenten Rechtesystems ist nicht mehr beherrschbar. So muss beispielsweise jede Korrektur auf ihre Zulässigkeit gegen das originäre Rechtesystem geprüft werden. Widersprechende oder nicht gewollte Konstellationen werden wahrscheinlicher, insbesondere wenn sich Rechtesysteme von Komponenten überschneiden.

Diese Komplexitätszunahme bei der Erweiterung ist auch in der Praxis zu beobachten. Beispielsweise wird in UNIX diese umgangen, indem üblicherweise ein privilegierter Nutzer (Superuser, Administrator) ein Subjekt, welches alle Rechte besitzt, einführt, um helfend eingreifen zu können. Er kann beispielsweise die Vergabe von Rechten durch den Befehl chmod ändern. Das ist bei sensitiven Systemen nicht tragbar.

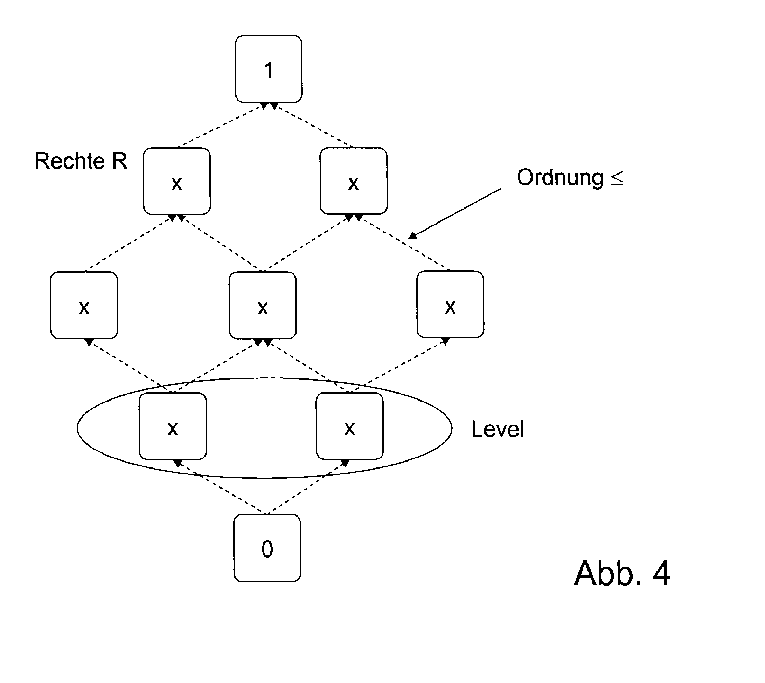

Abb. 4 zeigt eine Formalisierung der Rechte nach dem beanspruchten Verfahren als (Halb-)ordnung, also als anti-symmetrische und transitive Relation. Die Quadrate repräsentieren Rechte. Die Ordnung ≤ hat eine implikative Semantik: a≤b bedeutet "wenn ein Subjekt das Recht b inne hat, dann auch das Recht a". Das besondere Recht 0 bedeutet, die Abwesenheit jeglichen Rechtes. Das besondere Recht 1 bedeutet, dass alle Rechte eingeräumt werden. Die gestrichelten Pfeile visualisieren das Hasse Diagram der Ordnung, d.h. das Recht, auf das der Pfeil zeigt, beinhaltet mindestens das Recht, von dem der Pfeil ausgeht. Die Ordnung ist der transitive Abschluss des Hasse Diagramms.

Ein konkretes Beispiel für so ein Rechtesystem sind Rechtevektoren an Objekten in einem Betriebssystem. Jede Datei hat einen Vektor (rwx) für read, write und execute. Damit ist die 8-elementige Menge der Rechte dann (0,0,0), (1,0,0), ..., (1,1,1), und die Ordnung ist die komponentenweise Ordnung, also (a,b,c) ≤ (a',b',c') dann und nur dann, wenn a≤a' und b≤b' und c≤gc' (0≤1). Man beachte den wichtigen Unterschied, dass das Recht dadurch noch nicht einem Subjekt zugeordnet ist.

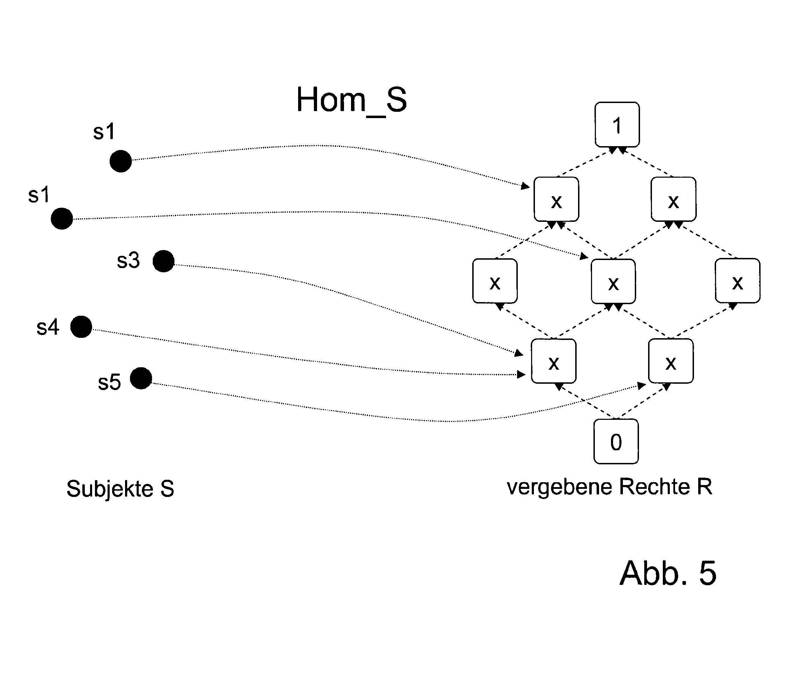

Abb. 5 zeigt eine Definition der eingeräumten Rechte nach dem beanspruchten Verfahren, wobei jedem der Subjekte s1, s2, ..., s5 ein Recht zugeordnet wird. Die Abbildung zeigt die Subjekte als schwarze Kreise und die Rechte wie in Abb. 4. Der Graph mit der Beschriftung "vergebene Rechte R" stellt wieder die Ordnung der Rechte dar. Der von einem Subjekte ausgehende und an einem Recht endende mit Hom_S beschriftete Pfeil hat die Semantik, dass das Subjekt am Ausgang das Recht am Ende besitzt.

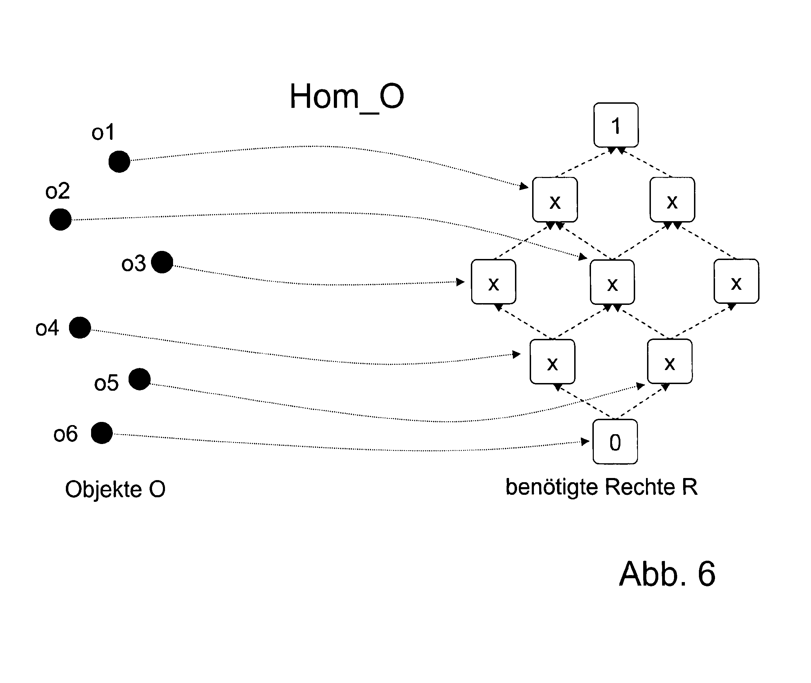

Abb. 6 zeigt eine Definition der notwendigen Rechte nach dem beanspruchten Verfahren. In der Abbildung sind Objekte o1, o2, ..., o6 als schwarze Kreise dargestellt. Wie in der vorhergehenden Abbildung sind (die gleichen Rechte) als Graph in der rechten Seite der Abbildung als Ordnung dargestellt. Ein mit Hom_O beschrifteter Pfeil, der von einem Objekt ausgeht und an einem Recht endet bedeutet, dass das Objekt am Anfang des Pfeils mindestens das Recht am Ende des Pfeils benötigt.

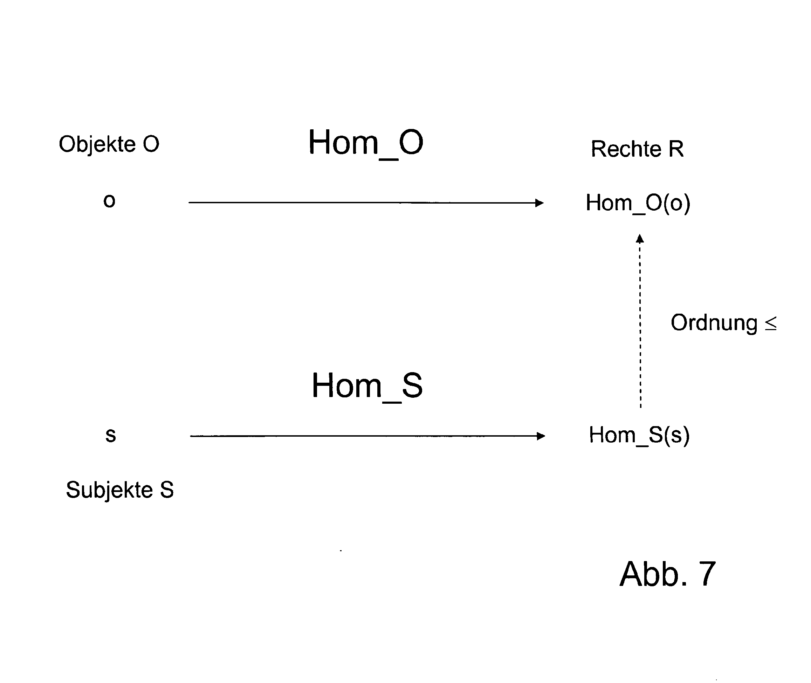

Abb. 7 illustriert die Einbettung der Objekte und der Subjekte in die Rechte. Das in der Abbildung dargestellte Objekt o hat eine Rechtezuordnung Hom_O(o), die dem erforderlichen Recht entspricht. Das in der Abbildung dargestellte Subjekt s hat eine Rechtezuordnung Hom_S(s), die dem eingeräumten Recht entspricht. Durch die Rechteordnung lässt sich bestimmen, ob das Subjekt s ein Recht an dem Objekt o hat, also ob in der Ordnung der Rechte Hom_S(s) ≥ Hom_O(o) gilt. Dann hat Subjekt s ein Recht an Objekt o.

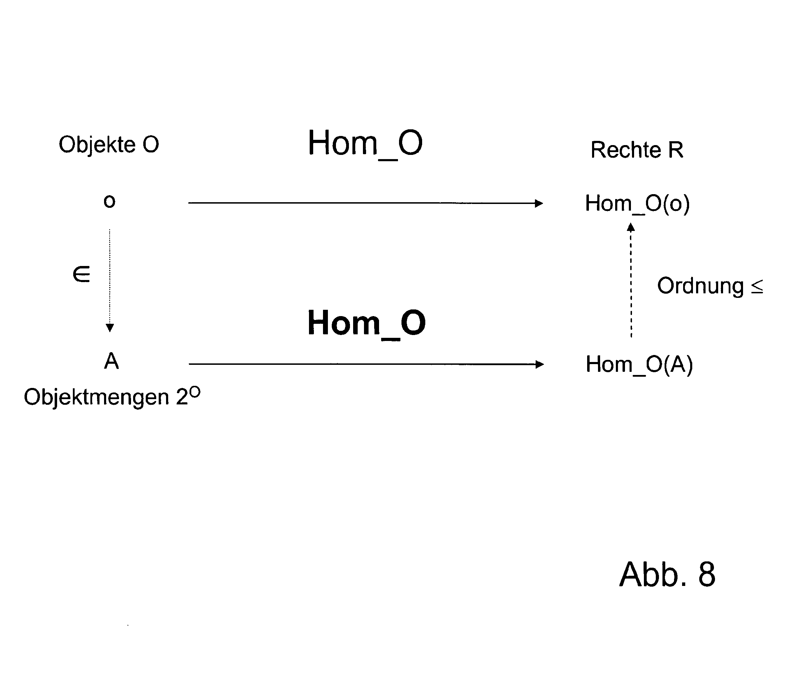

Abb. 8 illustriert die Aggregation von Objekten nach dem beanspruchten Verfahren. In der Abbildung repräsentiert A eine Aggregation von Objekten aus der Menge aller Aggregationen 2^{O}. Sind die Aggregationen Mengen, so ist die Menge aller Aggregationen 2^{O} die Potenzmenge. Ziel ist es, die notwendigen Rechte einer Aggregation zu definieren.

Dies kann durch eine "freie Konstruktion" geschehen. Die Aggregation benötigt dann das maximale Recht aller beteiligten aggregierten Objekte. Universell formuliert entspricht das der Zuordnung eines Rechtes **Hom_O**(A) an der Aggregation A durch einen Morphismus **Hom_O.** Dieser kann (frei) aus dem Morphismus Hom_O konstruiert werden, der die notwendigen Rechte Hom_O(o) an einem Objekt O repräsentiert. Um ein Recht an dem aggregierten Objekt A zu haben, müssen die Rechte an allen Objekten in dem aggregierten Objekt A vorhanden sein.

Das vorteilhafte an dieser Konstruktion ist, dass sie sich sehr leicht berechnen und auch einfach implementieren lässt: Das Recht Hom_O(A) ist definiert als das Maximum der Menge {Hom_O(o) |o∈A}.

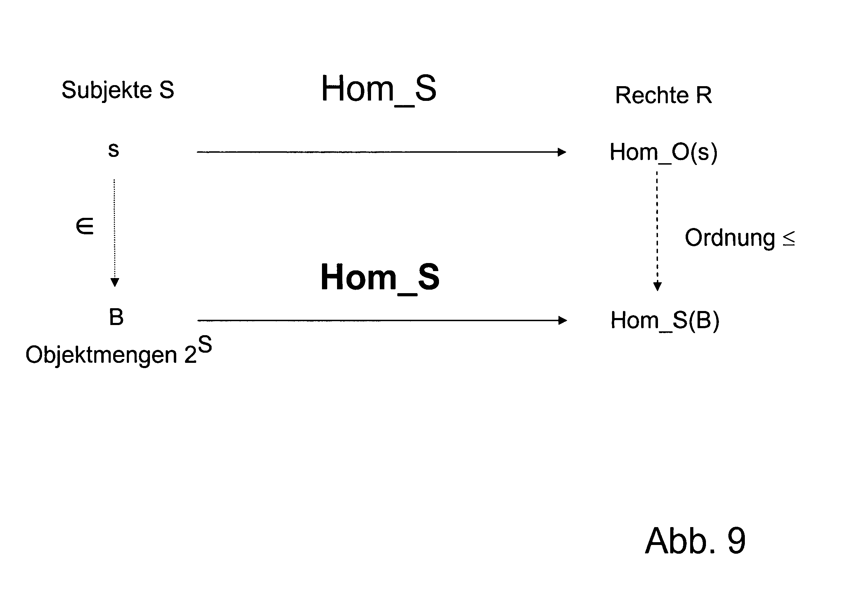

Wie mit den Rechten für Objekte, kann auch mit den Rechten von Subjekten verfahren werden. Abb. 9 illustriert dazu die die Aggregation von Subjekten und deren Rechte nach dem beanspruchten Verfahren.

In der Abbildung ist ein Aggregat B aus der Menge aller Aggregate an Subjekten 2^{S} dargestellt. Üblicherweise werden das Mengen oder Multimengen sein, also Sammlungen von Subjekten, in denen dasselbe Subjekt häufiger enthalten sein kann. Der Pfeil mit der Beschriftung ∈ repräsentiert auch in diesem Diagramm eine Part-of Relation wie die Elementrelation bei Mengen. Der obere waagrechte Pfeil Hom_S repräsentiert die Zuordnung von Rechten R zu Subjekten S. Der untere waagrechte Pfeil Hom_S ordnet jedem Aggregat B ein (Aggregat-)Recht Hom_S(B) - analog wie bei den Objekten in Abb. 8 - zu. Auch hier ist eine bevorzugte Konstruktion eine freie Erweiterung von dem Morphismus von Subjekten in die Rechte, der für Mengen wie folgt definiert werden kann: Das Recht **Hom_S**(B) ist das Minimum der Rechte aus der Menge {Hom_S(s) | s∈B}.

Ein wesentlicher Aspekt beider Konstruktionen ist, dass die Konstruktion der Rechte der Aggregate uniform oder sogar universell ist. Das hat als wesentliche Konsequenz, dass die Rechte konsistent für beliebige Aggregate berechnet werden können und nicht vorab deklariert werden müssen. Es ist ebenso denkbar, die Konstruktion beim Erstellen eines Rechtesystems zur Vorberechnung der Rechte an Aggregaten zu verwenden.

Praktisch jedes Computer-System ist aus atomaren Objekten aufgebaut. Beispielsweise könnten diese atomaren Objekte Abläufe, Operationen, die durch Programme realisiert sind und Artefakte, die Inputs und Outputs dieser Tasks, eines Workflows sein. Ein Subjekt könnte ein Nutzer sein. Die Semantik dieses Workflows ist, dass ein Nutzer einen Task innerhalb einer Menge von Tasks ausführt. Dazu erhält er Input-Artefakte, die er unter Verwenden von den Operationen in Output-Artefakte verwandelt. Um das zu können, benötigt er ausreichende Rechte. Das neue Verfahren definiert das notwendige Recht für jede Task, jede Operation und jedes Artefakt, allerdings nicht die Rechte für einen Workflow, d.h. eine Sammlung von Tasks, Artefakten und Operationen. Das wird anhand der Workflowdekomposition in seine atomaren Objekte berechnet; In der freien Erweiterung ist das das Maximum aller Rechte von allen beteiligten Atomen.

Nimmt eine Menge von Nutzern an dem gesamten Workflow Teil, so benötigt jeder Nutzer in dieser Aggregation an Subjekten, ausreichende Rechte. Im freien Fall entspricht das dem kleinsten an einem beteiligten Nutzer vergebenen Recht.

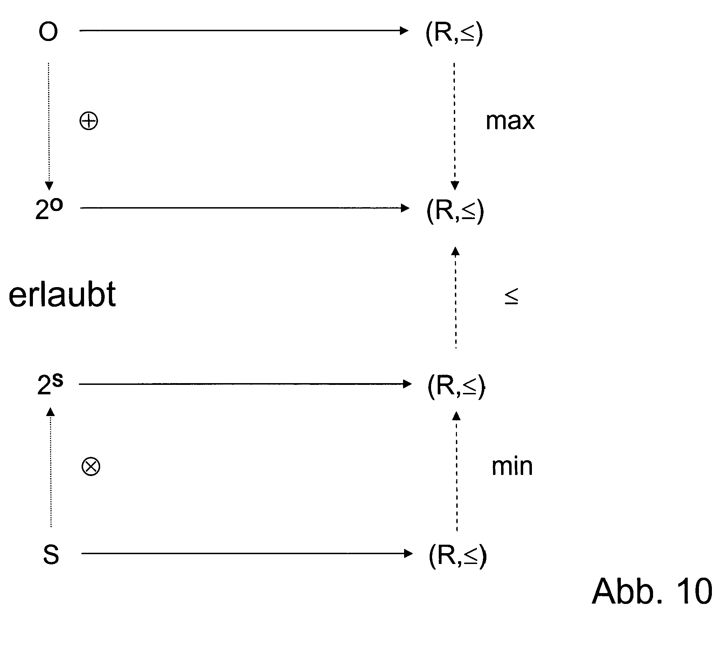

Abb. 10 illustriert das gesamte beanspruchte Verfahren als kommutatives Diagramm und zeigt, wie entschieden wird, ob ein Subjektaggregat ausreichend Rechte an einem Objektaggregat hat.

Die Abbildung zeigt eine Subjektaggregation ⊗ und eine Objektaggregation ⊕ sowie die beiden kommutativen Diagramme aus Abb. 8 und Abb. 9.

Da die Morphismen von den Subjektaggregaten und Objektaggregaten in die Rechte zeigen, ist nun das Recht eines Subjektaggregates an einem Objektaggregat durch die Relation ≤ definiert.

Im obigen Beispiel mit dem Workflow bedeutet das, dass die Nutzermenge den Workflow genau dann ausführen darf, wenn das Recht der Nutzermenge, das Minimum aller Rechte der Nutzer, größer bezüglich ≤ ist, als das notwendige Recht an dem Aggregat, das Maximum aller Rechte von allen beteiligten Atomen.

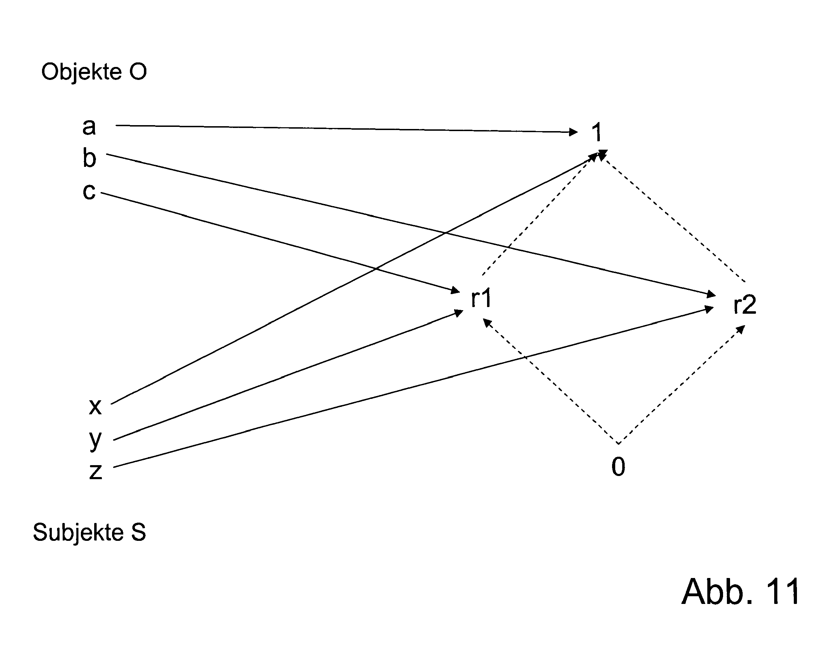

Abb. 11 illustriert eine konkrete Vergabe von atomaren Rechten nach dem beanspruchten Verfahren. Die Abbildung zeigt drei Objekte a,b,c und drei Subjekte x,y,z. Die durch die gestrichelten Pfeile dargestellte Rechteordnung hat die vier Elemente 0,r1,r2,1, die wie folgt geordnet sind: 0 ≤ r1, 0 ≤ r2, 0 ≤ 1, r1 ≤ 1, r2 ≤ 1.

Beispielsweise hat das Subjet x alle Rechte inne, und damit ist das Subjekt x das einzige, das an Objekt a ein Recht hat, da dieses Objekt a alle Rechte 1 benötigt. Objekt b benötigt das Recht r2 und Objekt c benötigt das Recht r1. Damit hat das Subjekt y, dem das Recht r1 eingeräumt ist, ein Recht an Objekt C aber nicht an Objekt b, da dieses mindestens Recht r2 benötigt. Dieses Recht haben nur die Subjekte z und x etc.

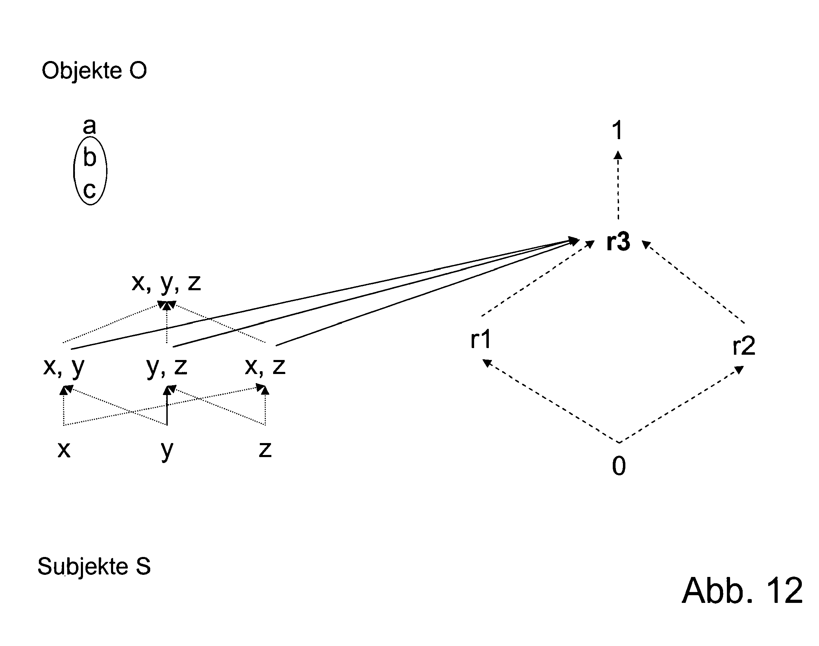

Abb. 12 illustriert ein Szenario, in dem die Objekte b und c aggregiert sind und Subjekte in alle möglichen Teilmengen der drei Subjekte aus dem vorhergehenden in Abb. 11 dargestellten Beispiel. Die Aggregation der Objekte b und c ist durch eine Ellipse dargestellt.

Das dargestellte Szenario zeigt die Einführung eines neuen Rechts r3 in die Rechteordnung. Die Objekte sollen die gleichen Rechte wie im vorhergehenden Beispiel haben. Das Szenario soll das Vieraugenprinzip realisieren, ohne dass die Subjekte b und c an Objekt a ein Recht haben.

In der freien Konstruktion des notwendigen Rechts für das aus den Objekten b und c bestehende Aggregat benötigt man das Maximum der Rechte r1 und r2, was in der ursprünglichen Ordnung das Recht 1 wäre. Mit dem Recht 1 hat aber ein Subjekt auch Recht an dem Objekt a. Deshalb wurde die Rechteordnung um ein weiteres Recht r3 erweitert, das für das Aggregat notwendige Recht in der erweiterten Ordnung realisiert und das kleiner als alle Rechte, die größer als r1 und r2 ist: Das Recht r3 ist das Maximum der Rechte r1 und r2. Und das Recht r3 ist kleiner als 1.

Das Vieraugenprinzip kann nun beispielsweise einfach realisiert werden, indem alle Subjektaggregate, die zwei Subjekte umfassen, das neue Recht r3 erhalten.

Das Beispiel zeigt illustrativ, wie Ordnungen zu Anforderungen konstruiert werden können, ohne dass das Rechtesystem tiefgreifend verändert werden muss. Durch die Definition der notwendigen Rechte an Objekten wird nochmals illustriert, wie Rechte an Aggregaten berechnet werden können und dies wird bei der Konstruktion der modifizierten Ordnung vorteilhaft verwendet.

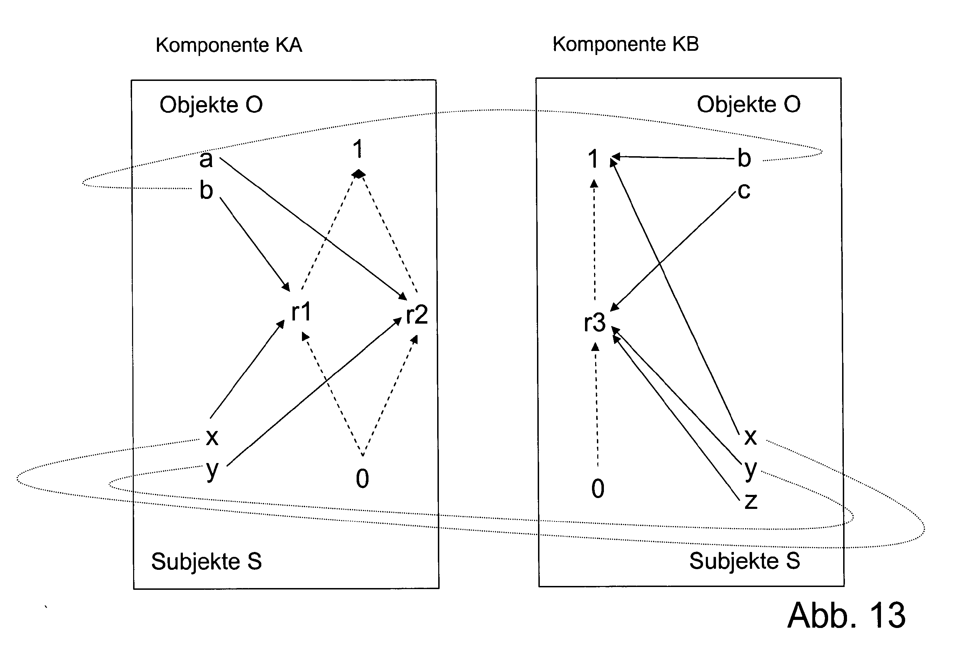

Abb. 13 illustriert zwei separierte Rechtekontexte, beispielsweise die zweier Computer-Systeme. Das ist ein Problem, das in der Praxis häufig vorkommt. Ein Programm auf dem Betriebssystem UNIX soll in einem verteilten System auf eine Datenbank mit eigenem Rechtesystem zugreifen. Meistens wird in so einer Situation ein künstlicher User in beiden Systemen eingeführt, dem entsprechende Rechte eingeräumt werden. Dieser User, oder in der hier verwendeten Sprache Subjekt, ist jedoch gar kein Subjekt. Dementsprechend werden alle Änderungen an Rechten nicht konsistent an dem künstlichen User vollzogen. Dies wird oft dadurch kompensiert, dass das künstliche Objekt in einem der Systeme, beispielsweise der Datenbank, alle Rechte eingeräumt wird und damit das Rechtesystem der Datenbank obsolet ist.

Die Abbildung selbst zeigt zwei unabhängige Rechtesysteme der Komponenten KA und KB, die als Rechtecke dargestellt sind. Die beiden Komponenten beinhalten die Subjekte x,y,z und die Objekte a,b,c.

Genauer umfasst Komponente KA die Objekte a und b und die Subjekte x und y. Das Rechtesystem der Komponente KA ist so angelegt, dass Subjekt x nur an Objekt b das Recht r1 hat und Subjekt y nur an Objekt a das Recht r2 hat. Die Rechte sind nicht in der Ordnung vergleichbar. Die zweite Komponente KB umfasst die Objekte b und c und die Subjekte x,y,z. Die Subjekte y und z haben an Objekt c das Recht r3 und das Subjekt x hat alle Rechte inne, die Objekt b verlangt.

Beide Komponenten KA und KB besitzen eigene von einander unabhängige Rechtesysteme, haben jedoch die Subjekte x und y und das Objekt b gemein.

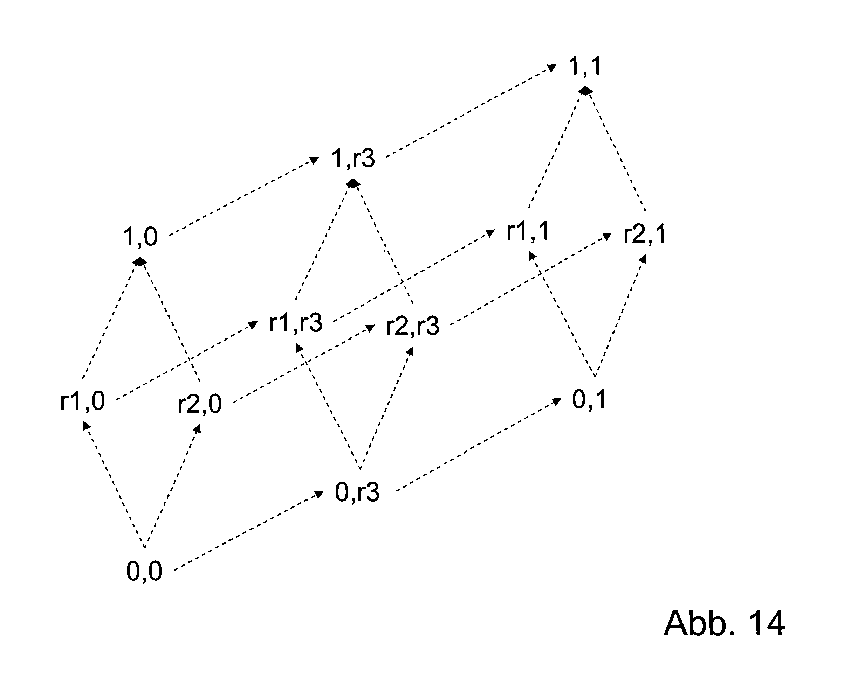

Das kanonische gemeinsame Rechtesystem in der Konstruktion nach dem beanspruchten Verfahren ist das direkte Produkt. Abb. 14 illustriert das direkte Produkt der Ordnungen der Rechtekontexte aus Abb. 13. Eine Definition des direkten produktes bietet http://de.wikipedia.org/wiki/Direktes_Produkt. Wendet man die Kategorielle Definition dieses Produktes, siehe beispielsweise http://mathworld.wolfram.com/CategoryProduct.html auf Mengen an, entspricht es dem Kartesischen Produkt, also der Menge von Paaren. Besitzt die erste Menge M1={0,r1, r2,r3} die vier Elemente 0, r1, r2, 1 und eine zweite Menge M2 ={0', r3, 1'} die drei Elemente 0', r3, 1', so besitzt das direkte Produkt M1xM2 beider Mengen die 12 Paare (0,0'), (r1,0'), (r2,0'), (1,0'),(0,r3), (r1,r3), (r2,r3), (1,r3), (0,1'), (r1,1'), (r2,1'), (1,1'). Sind die beiden Mengen M1 und M2 geordnet, d.h. existiert für jede der Mengen jeweils eine (anti-symetrische und transitive) Ordnungsrelation beispielsweise für M1 0≤r1, 0≤r2, 0≤1, r1≤1, r2≤1 und für M2 0'≤r3, r3≤1', so ist das direkte Produkt der beiden geordneten Mengen per Definition bestimmt zu der Menge M1xM2 mit der Produktordnung, die durch die Ordnungen auf M1 und M2 wie folgt definiert ist: (v1,v2) ≤ (v3,v4) genau dann, wenn v1≤v3 in der Ordnung von M1 und v2 ≤v4 in der Ordnung von M2. Damit ist M1xM2 teilweise geordnet:
(0,0')≤(r1,0'), (0,0') ≤ (r2,0'), (0,0') ≤ (1,0'), (0,0') ≤(0,r3), (0,0') ≤(r1,r3), (0,0') ≤ r2,r3),
(0,0') ≤(1,r3), (0,0') ≤(0,1'), (0,0') ≤(r1,1'), (0,0') ≤(r2,1'), (0,0') ≤(1,1'), (r1,0') ≤(r1,r3), etc. Die Elemente 0 und 0' und 1 und 1' sind zur Verdeutlichung der Systematik hier explizit unterschieden.

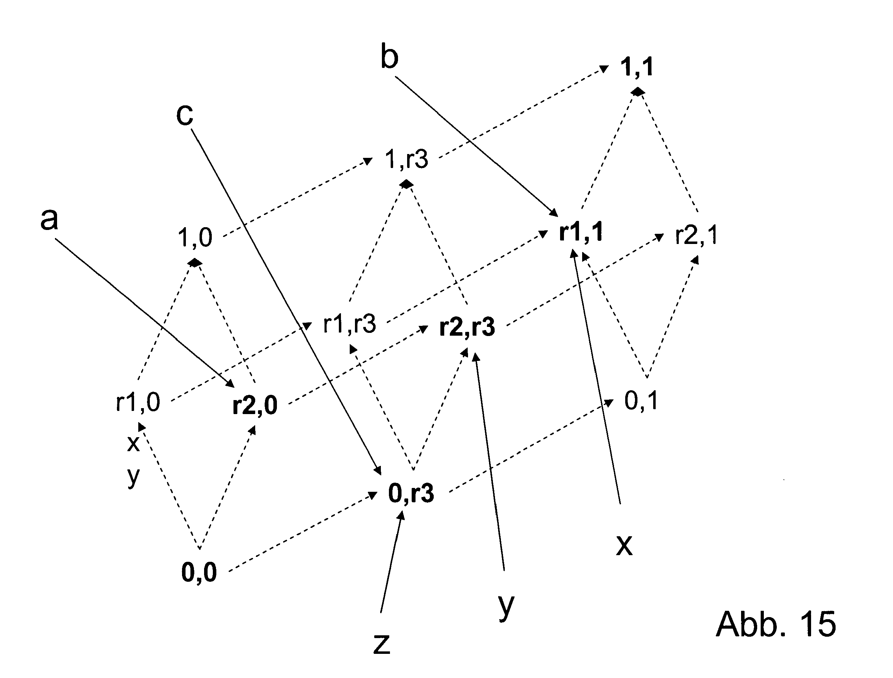

Abb. 15 zeigt die aus der universellen Konstruktion resultierenden Hasse Diagramm der Rechteordnung für Kontexte aus Abb. 13 nach dem beanspruchten Verfahren. Will man berechnen, welches Recht das Subjekt x hat, so ermittelt man in den Rechtesystemen der Komponenten die Rechte, die Subjekt x eingeräumt sind, also in der ersten Komponente KA das Recht r1 und in der zweiten Komponente KB das Recht r3. Damit hat Subjekt x mindestens das Recht (r1,r3). Das Objekt b benötigt in der ersten Komponente KA das Recht r1 und in der zweiten Komponente B das Recht 1. In dem System, bestehend aus beiden Komponenten, benötigt damit das Objekt b das Recht (r1,1). In der Abbildung sind die weiteren konservativ berechneten Rechte durch die Pfeile in gewohnter Weise dargestellt. Es fällt unmittelbar auf, dass Subjekt x ein Recht an Objekt b hat, und dass Subjekt z ein Recht an Objekt c hat. Ebenso hat Subjekt y ein Recht an Objekt a, da (r2,0) ≤ (r2,r3).

Durch die konservative Berechnung, d.h. der Annahme kein Recht zu haben, wenn kein Recht deklariert ist, ist das abgeleitete System sicher unter dem Aspekt der Vergabe von Rechten. Die Bilder der Morphismen Hom_O und Hom_S (in der Abbildung fett hervorgehobene Rechte) induzieren eine in das direkte Produkt eingebetete partielle Rechteordnung. Das Rechtesystem mit dieser partiellen Rechteordnung wird als genau "das gemeinsame" Rechtesystem angesehen. Rechte ohne Beitrag für das Rechtesystem können eliminiert werden.

Werden an dieses gemeinsamem Rechtesystem wieder Forderungen gestellt, wie beispielsweise ein Vieraugenprinzip, so kann das reduzierte Rechtesystem wie in der Beschreibung zu Abb. 12 modifiziert werden.

So könnte beispielsweise auch in dem gemeinsamen Rechtesystem eine Anomalie dadurch entstehen, beispielsweise dass im einem System ein Subjekt ein Recht an einem Objekt besitzt, im anderen Kontext jedoch am gleichen Objekt kein Recht hat. Eine Anomalie kann durch diese Konstruktion identifiziert werden. Diese tritt genau dann auf, wenn ein Subjekt an einem Objekt ein Recht verliert, das es in einem Kontext besessen hat. Damit lassen sich Rechteanomalien auch zur Laufzeit berechnen, denn ein Kontext kann auch dynamisch im Rahmen einer Ausführung eines Prozesses entstehen.

Die Methode, die Rechte so zu verwalten, ermöglicht es, zur Laufzeit beispielsweise bei einer Serviceinvokation ein Rechtekontext on the fly zu berechnen und Anomalien zu identifizieren und durch Einführen neuer Rechte konsistent aufzulösen.

Die Lösung der angeführten Probleme ist das Abstrahieren konkreter Rechtesysteme, wie beispielsweise Benutzer, Rollen, Gruppen in IT-Systemen, Anwendungsprogrammen, Mengen an Klassen, Instanzobjekten, Datensätzen, Objekten, Ressourcen, etc. als die oben genannten Objekte und Subjekte, denen dann nach dem beanspruchten Verfahren Rechte vorteilhaft zugeordnet werden können.

Um eine komplexe Operation wie einen Workflow, Transaktionen, Interaktionen etc. als Operation zu unterstützen, müssen Teile dieser Objekte und Subjekte interagieren. Ein Subjekt benötigt ein ausreichendes Recht an einem atomaren Objekt. Einem Subjekt, wie ein Nutzer, ein Prozess, eine Anfrage etc. sind oder werden Rechte eingeräumt, die das Subjekt implizit befähigen, Operationen auf Objekte auszuüben, wenn das eingeräumte Recht ausreicht.

Nach dem beanspruchten Verfahren hat ein Subjekt s ein Recht an einem Objekt o, wenn das Recht des Subjekts ausreicht, also wenn hom_O (o) ≤ hom_S(s) gilt, wobei ≤ eine Halb-Ordnung der Rechte ist. Mit diesem Verfahren lassen sich die Rechte von Subjekten und Objekten (homomorph) aggregieren. Entscheidend ist, dass die Rechte einer Aggregation sich herleiten oder inferrieren lassen, beispielsweise durch hom_O (o ⊕ o') = max(hom_O(o), hom_O(o')) bzw. hom_S(s ⊗ s') = min(hom_S(s), hom_S(s')).

Das Vorgehen entspricht der natürlichen Semantik, dass in einem komplexen Vorgang, in dem eine Aggregation von Subjekten eine Aggregation von Objekten benötigt, jedes Subjekt in der Aggregation ausreichend viele Rechte an allen Objekten haben muss.

Legt man dieser Vorgehensweise ein System aus Kontexten zu Komponieren zugrunde, lässt sich dynamisch (zur Ausführungszeit) ermitteln, ob ein spezielles Subjekt oder eine Menge von Subjekten eine Aggregation von Objekten nutzen darf. Es muss lediglich das Recht für jedes atomare Objekt und jedes atomare Subjekt definiert sein.

Besonders vorteilhafte Ordnungen entstehen bei Verwenden von sogenannten Rechtevektoren. Ebenfalls vorteilhaft ist ein durch die oben beschriebene Konstruktion erzeugte partielle oder vollständige Boolsche Algebra oder Verband. Diese lassen sich kompakt und effizient darstellen und implementieren.

Die Morphismen hom_S und hom_O können beispielsweise mit Hashing-Funktionen realisiert werden oder als Labeling direkt an Objekte gelinkt werden.

Es ist auch denkbar, dass ein (notwendiges oder hinreichendes) Recht während eines Szenarios inferiert wird oder dass die Rechtemenge während eines solchen Szenarios konfliktfrei um adäquate Rechte erweitert wird. Beispielsweise kann anhand des Verhaltens der Subjekte während eines Testszenarios, die an einem Workflow teilhaben, die notwendigen und hinreichenden Rechte (durch Aufzeigen von Konflikten und Einführen neuer Rechte in die Ordnung der Rechte) ermittelt werden. Aus dem so gewonnenen Rechtesystem kann ein statisches Rechtesystem kompiliert werden, gegen das im operativen Betrieb verifiziert wird.

Das Verfahren ist so geartet, dass nahezu jedes der oben genanten Access Right Konzepte sich einbetten lässt, und darüber hinaus werden durch die ermöglichte (dynamische) Berechnung der Rechte weitere Freiheitsgrade geschaffen, die z.B. erlauben, Rechte-Konflikte zur Laufzeit aufzulösen.

## Patentansprüche

1. Verfahren zur Gewährleistung von Sicherheit, bei dem Subjekten Rechte an Objekten eingeräumt werden, wobei der Zugriff durch ein Subjekt auf ein Objekt nur dann möglich ist, wenn dem Subjekt ausreichende Rechte eingeräumt sind, **dadurch gekennzeichnet, dass** die Rechte geordnet sind und das Verfahren die folgenden Schritte umfasst:
- Zuordnen eines oder mehrerer notwendigen Rechte an ein Objekt durch eine erste Funktion von den Objekten in die Rechte,
- Zuordnen eines oder mehrerer eingeräumten Rechte an ein Subjekt durch eine zweite Funktion von den Subjekten in die Rechte und
- Prüfen, ob ein Subjekt Rechte an einem Objekt hat, indem das Ergebnis der ersten Funktion mit dem Ergebnis der zweiten Funktion bezüglich der Ordnung verglichen wird.

2. Verfahren zur Gewährleistung von Sicherheit nach Anspruch 1, **dadurch gekennzeichnet, dass** die erste Funktion ein auf Aggregationen von Objekten erweiterter Morphismus ist und das Recht an einem Aggregat durch Kombinieren der Rechte an den einzelnen Objekten definiert ist.

3. Verfahren zur Gewährleistung von Sicherheit nach Anspruch 2 oder 3, **dadurch gekennzeichnet, dass** das Recht an einem Aggregat durch das Maximum der Rechte der aggregierten Objekte definiert ist.

4. Verfahren zur Gewährleistung von Sicherheit nach einem der vorigen Ansprüche, **dadurch gekennzeichnet, dass** die zweite Funktion ein auf Aggregationen von Subjekten erweiterter Morphismus ist und das Recht an einem Aggregat durch Kombinieren der Rechte an den einzelnen Subjekten definiert ist.

5. Verfahren zur Gewährleistung von Sicherheit nach Anspruch 4, **dadurch gekennzeichnet, dass** das Recht an einem Aggregat durch das Minimum der Rechte der aggregierten Subjekte definiert ist.

6. Verfahren zur Gewährleistung von Sicherheit nach einem der vorhergehenden Ansprüche, **dadurch gekennzeichnet, dass** wenn ein Subjekt ein Recht an einem Objekt in einem Kontext benötigt, die Rechte und die beiden Funktionen so erweitert werden, dass dem Subjekt ausreichend Rechte an dem Objekt eingeräumt werden, ohne dass die Rechte anderer Subjekte erweitert werden.

7. Verfahren zur Gewährleistung von Sicherheit nach einem der vorhergehenden Ansprüche zur Gewährleistung der Sicherheit in mehreren Kontexten, **dadurch gekennzeichnet, dass** das Recht von einem Subjekt an einem Objekt in dem gemeinsamen Kontext durch das direkte Produkt der Rechte der mehreren Kontexte definiert ist.

8. Verfahren zur Gewährleistung von Sicherheit nach Anspruch 7, **dadurch gekennzeichnet, dass** das Recht von einem Subjekt an einem Objekt in dem gemeinsamen Kontext dynamisch berechnet wird.

9. Verfahren zur Gewährleistung von Sicherheit nach einem der vorhergehenden Ansprüche, **dadurch gekennzeichnet, dass** die Rechte eines Subjektes an einem Objekt in einer ersten Betriebsphase berechnet werden und das Ergebnis der Berechnung als Deklaration der Rechte des Subjekts an dem Objekt in einer zweiten operativen Phase verwendet wird.

10. Softwaresystem zur Gewährleistung von Sicherheit, **dadurch gekennzeichnet, dass** das Softwaresystem Mittel umfasst, die eines der Verfahren aus den vorangegangenen Ansprüchen realisieren.

11. Integriertes System umfassend mehrere Komponenten zur Gewährleistung von Sicherheit, **dadurch gekennzeichnet, dass** ein Softwaresystem nach Anspruch 10 die Gewährleistung der Sicherheit obliegt.
